# EUROPÄISCHE PATENTSCHRIFT

(11) **EP 3 724 006 B1**
(45) Veröffentlichungstag und Bekanntmachung des Hinweises auf die Patenterteilung: **22.09.2021**
(21) Anmeldenummer: 18778439.2
(22) Anmeldetag: 24.09.2018
(51) Int. Cl.: B60C 11/01, B60C 11/13, B60C 11/03, B60C 11/04

(54) **NUTZFAHRZEUGREIFEN**
COMMERCIAL TIRE
PNEUMATIQUES POUR VÉHICULES UTILITAIRES

(30) Priorität: 11.12.2017 DE 102017222341
(43) Veröffentlichungstag der Anmeldung: 21.10.2020
(73) Patentinhaber: Continental Reifen Deutschland GmbH, 30165 Hannover (DE)
(72) Erfinder: KRISTEN, Florian, 30419 Hannover (DE); WÜST, Alexander, 30419 Hannover (DE)
(74) Vertreter: Continental Corporation
(86) Internationale Anmeldenummer: PCT/EP2018/075722
(87) Internationale Veröffentlichungsnummer: WO 2019/115036

(56) Entgegenhaltungen:
- EP-A2- 0 313 361
- JP-A- 2000 006 616
- JP-A- 2009 179 148
- US-A1- 2008 066 841

## Beschreibung

Die Erfindung betrifft einen Nutzfahrzeugreifen mit einem Laufstreifen mit zumindest zwei auf Profiltiefe ausgeführten Umfangsrillen, welche mittlere Profilpositive und schulterseitige Profilpositive voneinander trennen, wobei die Umfangsrillen zu den mittleren Profilpositiven Rillenflanken und die schulterseitigen Profilpositive zur Seitenwand verlaufende Schulterflanken aufweisen, wobei zumindest eine Rillenflanke zumindest einer Umfangsrille und/oder zumindest eine Schulterflanke mit in axialer Richtung in das bzw. die Profilpositiv(e) hineinragenden, zur Laufstreifenoberfläche offenen Vertiefungen versehen ist, wobei jede Vertiefung durch zumindest eine Fläche begrenzt ist.

Ein derartiger Nutzfahrzeugreifen ist beispielsweise aus der EP 0 313 361 A2 bekannt. Gemäß einem Ausführungsbeispiel weist der Nutzfahrzeugreifen einen Laufstreifen auf, welcher in jeder Laufstreifenhälfte mit einer in Draufsicht gerade verlaufenden mittleren Umfangsrille und einer in Draufsicht gerade verlaufenden schulterseitigen Umfangsrille versehen ist. In jeder mittleren Umfangsrille ist ein freistehender umlaufender Steg ausgebildet, welcher den Laufstreifenabrieb vergleichmäßigen soll. Die Rillenflanken jeder Umfangsrille sind mit in das jeweilige Profilpositiv hineinragenden, zur Laufstreifenoberfläche offenen Vertiefungen versehen, wobei jede Vertiefung an der Laufstreifenperipherie gleichschenkelig trapezförmig ausgeführt ist.

Aus der gattungsbildenden US 2008/0066841 A1 ist ein Fahrzeugluftreifen mit einem Laufstreifen mit Umfangsrillen mit Rillenflanken bekannt, wobei einige der Rillenflanken mit in axialer Richtung in das jeweilige Profilpositive hineinragenden, zur Laufstreifenoberfläche offenen Vertiefungen versehen sind.

Die JP 2009 179 148 A offenbart einen Fahrzeugluftreifen mit einem Laufstreifen mit einer durch eine Umfangsrille begrenzten schulterseitigen Profilrippe, in welcher im Bereich außerhalb der Bodenaufstandsfläche eine schmale Umfangsnut verläuft, die der schulterseitige Profilrippe einen laufstreifenaußenseitigen Rippenabschnitt verleiht. Der laufstreifenaußenseitige Rippenabschnitt ist mit einer Vielzahl von schmale Quernuten durchquert.

Es ist bekannt und üblich, in Laufstreifen von Nutzfahrzeugreifen in Umfangsrillen einmündende Sacknuten, Einschnitte, Querrillen und dergleichen auszubilden, welche an der Laufstreifenperipherie Griffkanten zur Verfügung stellen und derart zur Verbesserung der Griffeigenschaften auf nassem, sandigem, schottrigem, matschigem oder schneebedecktem Untergrund beitragen. Insbesondere können auch in die Umfangsrillen einmündende, oberflächlich ausgebildete Rillen vorgesehen sein, welche die Wasserableiteigenschaften verbessern und ebenfalls Griffkanten an der Laufstreifenperipherie zur Verfügung stellen.

Vor allem beim Fahren auf unbefestigtem oder/und schneebedecktem Untergrund werden verstärkt Spannungen in die Schulterflanken, die Rillenflanken und den Rillengrund der Umfangsrillen eingeleitet, wodurch die Gefahr erhöht ist, dass Risse im Bereich der Einschnitt- und Rillengründe entstehen.

Der Erfindung liegt daher die Aufgabe zugrunde, einen Nutzfahrzeugreifen der eingangs genannten Art zur Verfügung zu stellen, welcher im Bereich der Rillengründe von Umfangsrillen und im Bereich von Schulterflanken eine deutlich geringere Rissanfälligkeit aufweist und zusätzlich gute Griffeigenschaften, insbesondere auf nassem, sandigem, schottrigem, matschigem und/oder schneebedeckten Untergrund, sicher stellt.

Gelöst wird die gestellte Aufgabe erfindungsgemäß dadurch, dass die Vertiefungen, jeweils an der Laufstreifenperipherie ermittelt, gegenüber dem Niveau der Rillenflanke bzw. Schulterflanke eine Tiefe von 2,0 mm bis 5,0 mm und am Niveau der Rillenflanke bzw. Schulterflanke eine Breite von 4,0 mm bis 15,0 mm aufweisen, wobei die Fläche(n), welche jeweils eine der Vertiefungen begrenzt bzw. begrenzen, derart gekrümmt ist bzw. sind, dass sie an ihrem bzw. ihren radial inneren Ende(n) in einer in radialer Richtung ermittelten Tiefe von 35% bis 90% der Profiltiefe knickfrei in die Rillenflanke bzw. in einer in radialer Richtung ermittelten Tiefe von 35% bis 150% der Profiltiefe knickfrei in die Schulterflanke übergehen.

Sämtliche eine Vertiefung begrenzende Flächen gehen durch ihre spezielle Krümmung knickfrei in die Rillenflanke bzw. Schulterflanke über. Im Gegensatz zu herkömmlichen in Umfangsrillen einmündenden bzw. an Schulterflanken austretenden Rillen und Einschnitten treten im Bereich erfindungsgemäßer Vertiefungen keine oder kaum Spannungen an den Rillen- bzw. Schulterflanken auf, sodass diese sehr gut vor Rissen geschützt sind. Da die Fläche(n), welche die an Rillenflanken ausgebildeten Vertiefungen begrenzt bzw. begrenzen, höchstens bis in eine Tiefe von 90% der Profiltiefe reicht bzw. reichen, ist sichergestellt, dass die Fläche(n) vor einem etwaigen Querschnittsradius des Rillengrundes der Umfangsrille ausläuft. Dadurch werden, beispielsweise im Vergleich zu auf die Profiltiefe ausgeführte Einschnitte, insbesondere Spannungsspitzen am Rillengrund von Umfangsrillen effektiv vermieden, was die Rissbeständigkeit in diesen Bereichen zusätzlich erhöht. Die Fläche(n), welche die an den Schulterflanken ausgebildeten Vertiefungen begrenzen, können bis auf 150% der Profiltiefe reichen. Diese Vertiefungen können beispielsweise beim Fahren auf schneebedecktem Untergrund "größere" Mengen an Schnee aufnehmen, wodurch über den Effekt der "Schnee-Schnee-Reibung" die Griffeigenschaften in bestimmten Fahrsituation, beispielsweise bei Kurvenfahrt, verbessert werden. Zusätzlich stellen sämtliche Vertiefungen an der Laufstreifenperipherie Griffkanten zu Verfügung, wodurch die Nass- und Schneegriffeigenschaften des Nutzfahrzeugreifens insgesamt positiv beeinflusst werden. Da die Fläche(n) bis eine Tiefe von mindestens 35% der Profiltiefe reicht bzw. reichen, bleiben die erwähnten Griffkanten auch bei fortgeschritten abgeriebenem Laufstreifen erhalten. Die erfindungsgemäß vorgesehenen Vertiefungen ermöglichen daher gute Griffeigenschaften auf schwer zu befahrenen Untergründen bzw. Fahrbahnen, wobei Umfangsrillen und Schulterflanken gleichzeitig sehr gut vor Rissen geschützt sind.

Gemäß einer bevorzugten Ausführungsvariante beträgt die Tiefe der Vertiefungen an der Laufstreifenperipherie gegenüber dem Niveau der Rillenflanke bzw. Schulterflanke höchstens 3,0 mm. Durch derart flache Vertiefungen wird die Rissanfälligkeit weiter reduziert.

Ferner ist es bevorzugt, wenn die in radialer Richtung ermittelte Tiefe, in welcher die Fläche(n) knickfrei in die Rillenflanke übergeht bzw. übergehen, höchstens 75% der Profiltiefe beträgt. Dadurch wird die Wahrscheinlichkeit weiter reduziert, dass etwaige zu Rissen führende, hohe Spannungen bis zum Rillengrund geleitet werden.

Ferner ist es bevorzugt, wenn die in radialer Richtung ermittelte Tiefe, in welcher die Fläche(n) knickfrei in die Schulterflanke übergeht bzw. übergehen, 70% bis 120% der Profiltiefe beträgt.

Die beim Fahren in die Schulterflanken, die Rillenflanken und den Rillengrund eingeleiteten Spannungen werden weiter reduziert, wenn die Vertiefungen am radial inneren Ende, am Niveau der Rillenflanke bzw. Schulterflanke eine Breite von 30% bis 50% ihrer an der Laufstreifenperipherie, am Niveau der Rillenflanke bzw. Schulterflanke ermittelten Breite, aufweisen.

Gemäß einer bevorzugten Ausführungsvariante sind die Vertiefungen in Draufsicht insgesamt U-förmig, wobei die Vertiefungen beispielsweise durch eine einzige in Draufsicht bogen- oder U-förmige Fläche begrenzt sind. Bevorzugter Weise sind die in Draufsicht insgesamt U-förmigen Vertiefungen an der Laufstreifenperipherie in Draufsicht trapezförmig und an dieser durch Trapezschenkel bildende Kanten und eine weitere Kante begrenzt. Insbesondere durch die Trapezschenkel bildenden Kanten werden zusätzliche "Querkanten" an der Laufstreifenperipherie zur Verfügung gestellt, welche zur Verbesserung der Griffeigenschaften beitragen. In diesem Zusammenhang ist es besonders effektiv, wenn die die Trapezschenkel bildenden Kanten, welche die Vertiefungen an der Laufstreifenperipherie begrenzen, zur Umfangsrichtung unter einem Winkel von 30° bis 80°, insbesondere von 55° bis 75°, verlaufen.

Gemäß einer weiteren bevorzugten Ausführungsvariante sind die Vertiefungen an der Laufstreifenperipherie durch zwei, in Draufsicht V-förmig zueinander verlaufende Kanten begrenzt, welche zusätzlich "Querkanten" darstellen. Die Griffwirkung der Kanten ist besonders ausgeprägt, wenn die in Draufsicht V-förmig zueinander verlaufenden Kanten zur Umfangsrichtung unter einem Winkel von 40° bis 70°, insbesondere von 55° bis 65°, verlaufen.

Der Nutzfahrzeugreifen weist sehr ausgewogene, insbesondere gleichmäßig verbesserte, Griffeigenschaften auf, wenn beide Rillenflanken von zumindest einer Umfangsrille mit Vertiefungen versehen sind, wobei die Vertiefungen alternierend an den unterschiedlichen Rillenflanken ausgebildet sind.

Gemäß einer bevorzugten Ausführungsvariante ist die Anzahl der Vertiefungen derart gewählt, dass Vertiefungen, welche an derselben Rillenflanke bzw. Schulterflanke ausgebildet sind, an der Laufstreifenperipherie in Umfangsrichtung einen Abstand von 20,0 mm bis 80,0 mm voneinander aufweisen.

Eine weitere bevorzugte Ausführungsvariante ist dadurch gekennzeichnet, dass der Abstand der Vertiefungen, welche an derselben Schulterflanke ausgebildet sind, derart gewählt ist, dass in jedem Pitch des Laufstreifens zumindest eine, vorzugsweise genau eine, Vertiefung ausgebildet ist.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine Draufsicht auf einen Umfangsabschnitt einer Hälfte eines Laufstreifens eines Nutzfahrzeugreifens mit einer Ausführungsvariante der Erfindung,
Fig. 1a einen Schnitt entlang der Linie Ia-Ia der Fig. 1,
Fig. 1b eine Schrägansicht eines Details des Laufstreifens aus Fig. 1,
Fig. 2 eine Draufsicht auf einen Umfangsabschnitt einer Hälfte eines Laufstreifens eines Nutzfahrzeugreifens mit einer zweiten Ausführungsvariante der Erfindung,
Fig. 2a einen Schnitt entlang der Linie IIa-IIa der Fig. 2,
Fig. 2b eine Schrägansicht eines Details des Laufstreifens aus Fig. 2.

Erfindungsgemäße ausgeführte Nutzfahrzeugreifen sind insbesondere Reifen in Radialbauart für Lastkraftwägen, Schwerlastfahrzeuge und Baustellenfahrzeuge, welche sich besonders zum Fahren auf unbefestigten Straßen, insbesondere auf steinigem, sandigem, matschigem oder schneebedecktem Untergrund, eigenen.

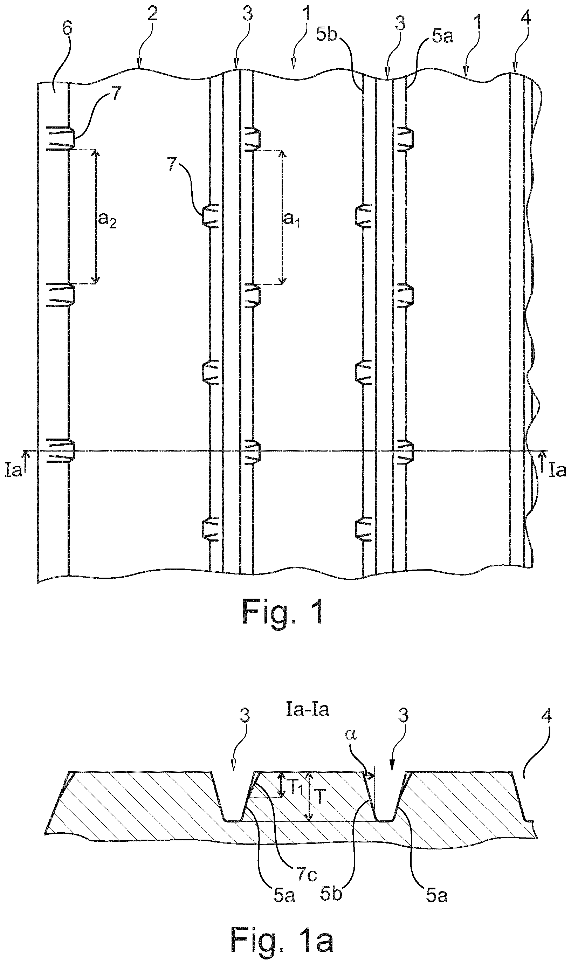

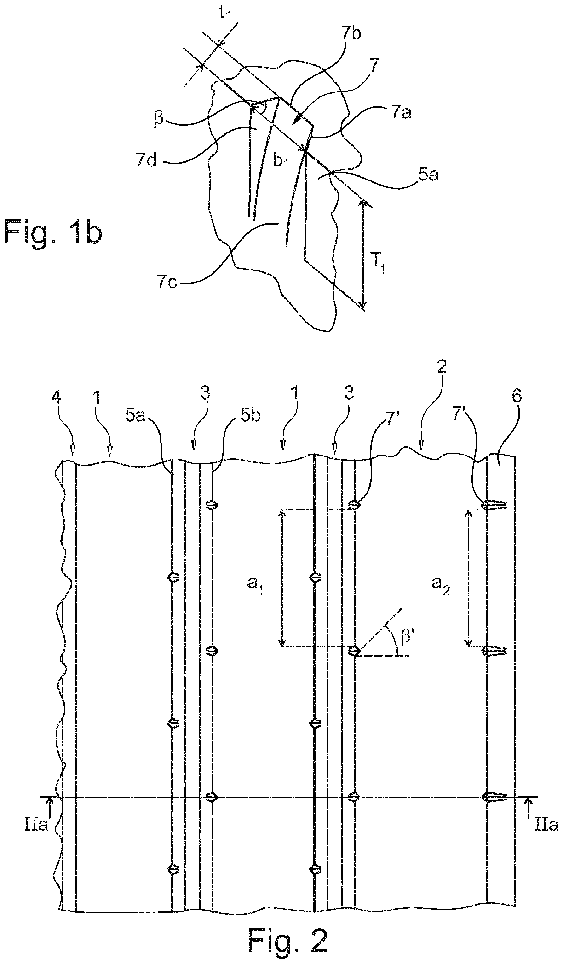

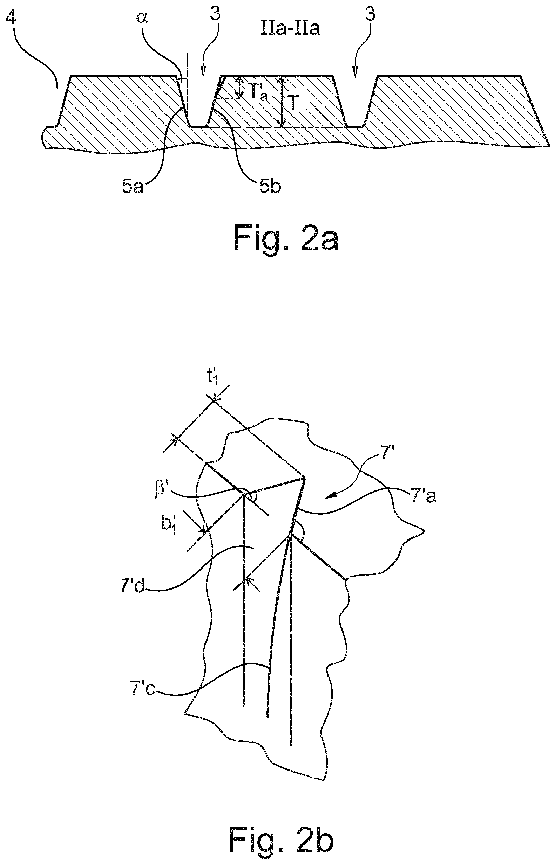

In den in Fig. 1 und Fig. 2 gezeigten Hälften eines Laufstreifens verlaufen innerhalb der Bodenaufstandsfläche zwei in Umfangsrichtung umlaufende mittlere Profilpositive 1 und ein schulterseitiges Profilpositiv 2. Die Profilpositive 1, 2 sind lediglich schematisch und vereinfacht dargestellt und können eine Vielzahl in Umfangsrichtung aufeinanderfolgender Blöcken aufweisen oder in Form von umlaufenden Profilrippen ausgeführt sein, wobei die Blöcke bzw. Profilrippen ferner mit Einschnitten, Rillen und dergleichen strukturiert sein können. Die in Fig. 1 und Fig. 2 nicht gezeigte Laufstreifenhälfte ist vorzugsweise übereinstimmend zur gezeigten Laufstreifenhälfte ausgeführt, wobei zwischen den Laufstreifenhälften eine sich entlang des Reifenzenits erstreckende, in Draufsicht gerade Umfangsrille 4 verläuft, von welcher in Fig. 1 und Fig. 2 nur ein Teilbereich zu sehen ist. Die Profilpositive 1, 2 sind durch in Draufsicht beim gezeigten Ausführungsbeispiel gerade Umfangsrillen 3 voneinander getrennt. Wie in Fig. 1a und Fig. 2a zeigen, sind die Umfangrillen 3, 4 auf die jeweils vorgesehene Profiltiefe T ausgeführt, welche für Nutzfahrzeugreifen üblicherweise 12,0 mm bis 20,0 mm beträgt.

Die Umfangsrillen 3 sind jeweils durch eine laufstreifeninnenseitige Rillenflanke 5a und eine laufstreifenaußenseitige Rillenflanke 5b begrenzt, welche beim gezeigten Ausführungsbeispiel, im Querschnitt betrachtet, zur radialen Richtung unter einem Winkel α von 10° bis 20° verlaufen (Fig. 1a, Fig. 2a). Das schulterseitige Profilpositiv 2 ist laufstreifenaußenseitig durch eine zur nicht gezeigten Seitenwand verlaufende, in Umfangsrichtung umlaufende Schulterflanke 6 begrenzt.

An den Rillenflanken 5a, 5b der Umfangsrillen 3 und an der Schulterflanke 6 ist jeweils eine Vielzahl gegenüber dem Niveau der Rillenflanken 5a, 5b bzw. der Schulterflanke 6 in das jeweilige Profilpositiv 1, 2 in axialer Richtung hineinragender, zur Laufstreifenoberfläche offener Vertiefungen 7 (Fig. 1), 7' (Fig. 2) ausgebildet.

Die an jeder Rillenflanke 5a, 5b unmittelbar aufeinanderfolgenden Vertiefungen 7, 7' weisen in Umfangsrichtung voneinander Abstände a₁ von vorzugsweise 20,0 mm bis 80,0 mm auf. Die an den Rillenflanken 5a, 5b jeder Umfangsrille 3 vorgesehenen Vertiefungen 7, 7' sind alternierend an den unterschiedlichen Rillenflanken 5a, 5b ausgebildet, in Umfangsrichtung folgt daher eine an der Rillenflanke 5a ausgebildete Vertiefung 7, 7' abwechselnd auf eine an der Rillenflanke 5b ausgebildete Vertiefung 7, 7'. Ferner befinden sich die an der Rillenflanke 5a ausgebildeten Vertiefungen 7, 7' in Draufsicht jeweils mittig zwischen den zwei in Umfangsrichtung unmittelbar benachbarten, an der Rillenflanke 5b ausgebildeten Vertiefungen 7, 7'.

Die an der Schulterflanke 6 ausgebildeten Vertiefungen 7, 7' sind über den Laufstreifenumfang verteilt, wobei unmittelbar aufeinanderfolgende Vertiefungen 7, 7' in Umfangsrichtung voneinander einen Abstand a₂ von insbesondere 20,0 mm bis 80,0 mm aufweisen. Bevorzugter Weise ist der Abstand a₂ derart gewählt, dass in jedem "Pitch" zumindest eine, insbesondere genau eine, Vertiefung 7, 7' an der Schulterflanke 6 ausgebildet ist. Unter "Pitches" sind bekannter Weise gleichartig gestaltete, in unterschiedlichen Umfangslängen vorgesehene Profilabschnitte des Laufstreifens zu verstehen. Bei der in Fig. 1 gezeigten Variante befinden sich die an der Schulterflanke 6 ausgebildeten Vertiefungen 7, bezogen auf die Umfangsrichtung, in gleichen Positionen zu den an der laufstreifeninnenseitigen Rillenflanke 5a ausgebildeten Vertiefungen 7 und bei der in Fig. 2 gezeigten Variante befinden sich die an der Schulterflanke 6 ausgebildeten Vertiefungen 7', bezogen auf die Umfangsrichtung, in gleichen Positionen zu den an der laufstreifenaußenseitigen Rillenflanke 5b ausgebildeten Vertiefungen 7'.

Die Ausgestaltung einer Vertiefung 7 (Fig. 1) wird nachfolgend insbesondere anhand einer an der laufstreifenaußenseitigen Rillenflanke 5a ausgebildeten, in Fig. 1b gezeigten Vertiefung 7 beschrieben. Die Vertiefung 7 ist in Draufsicht auf den Laufstreifen insgesamt U-förmig und an der Laufstreifenperipherie gleichschenkelig trapezförmig ausgeführt (siehe auch Fig. 1). An der Laufstreifenperipherie ist die Vertiefung 7 durch Trapezschenkel bildende Kanten 7a und eine in Umfangsrichtung orientierte Kante 7b begrenzt, wobei die Trapezschenkel bildenden Kanten 7a in Draufsicht zur Umfangsrichtung unter einem Winkel β von 30° bis 80°, insbesondere von 55° bis 75°, verlaufen. Die Vertiefung 7 ist ferner durch einen an die in Umfangsrichtung orientierte Kante 7b anschließenden Boden 7c und zwei an die die Trapezschenkel bildenden Kanten 7a anschließende Seitenflächen 7d begrenzt. Der Boden 7c verläuft, im Querschnitt betrachtet, leicht gebogen sowie bezogen auf die Umfangsrille 3 nach außen gewölbt und geht an seinem radial inneren Ende in einer von der Laufstreifenperipherie in radialer Richtung ermittelten Tiefe T₁ (siehe auch Fig. 1a) knickfrei in die Rillenflanke 5a über. Die Seitenflächen 7d verdrehen sich ausgehend von den Kanten 7a mit zunehmender Tiefe zur Rillenflanke 5a, sodass sich mit zunehmender Tiefe die Neigung der Seitenflächen 7d zur Umfangsrichtung kontinuierlich verringert, wobei die Seitenflächen 7d in der erwähnten Tiefe T₁ ebenfalls knickfrei in die Rillenflanke 5a übergehen.

Die Tiefe T₁ beträgt 35% bis 90%, insbesondere höchstens 75%, der Profiltiefe T. Die Vertiefung 7 weist in Umfangsrichtung am Niveau der Rillenflanke 5a, eine Breite b₁ von 10,0 mm bis 15,0 mm und ferner an der Laufstreifenperipherie, gegenüber dem Niveau der Rillenflanke 5b eine Tiefe t₁ von 2,0 mm bis 5,0 mm, insbesondere von höchstens 3,0 mm, auf.

Eine mögliche Ausgestaltung einer Vertiefungen 7' (Fig. 2) wird nachfolgend anhand der in Fig. 2b gezeigten Vertiefung 7'beschrieben. Die Vertiefung 7' ist an der Laufstreifenperipherie durch zwei, in Draufsicht V-förmig zueinander verlaufende Kanten 7'a begrenzt, welche in Draufsicht zur Umfangsrichtung unter einem Winkel β' von 40° bis 70°, insbesondere von 55° bis 65°, orientiert sind. An die Kanten 7'a anschließende Seitenflächen 7'd begrenzen die Vertiefung 7'. Die Seitenflächen 7'd verlaufen an der tiefsten Stelle der Vertiefung 7' an einer Kante 7'c zusammen, welche, im Querschnitt der Umfangsrille 3 betrachtet, leicht gebogen sowie bezogen auf die Umfangsrille 3 nach außen gewölbt ist. Die Seitenflächen 7'd verdrehen sich ausgehend von den Kanten 7'a mit zunehmender Tiefe zur Rillenflanke 5b, sodass sich mit zunehmender Tiefe die Neigung der Seitenflächen 7'd zur Umfangsrichtung kontinuierlich verringert, wobei die Seitenflächen 7'd in einer Tiefe T₁' gemeinsam mit der Kante 7'd auslaufen und knickfrei in die Rillenflanke 5b übergehen.

Die Tiefe T₁' beträgt 35% bis 90%, insbesondere höchstens 75%, der Profiltiefe T. Die Vertiefung 7' weist in Umfangsrichtung am Niveau der Rillenflanke 5b, eine Breite b'₁ von 4,0 mm bis 10,0 mm und ferner an der Laufstreifenperipherie, gegenüber dem Niveau der Rillenflanke 5b eine Tiefe t₁ von 2,0 mm bis 5,0 mm, insbesondere von höchstens 3,0 mm, auf.

Abweichend von der in Fig. 2b gezeigten Vertiefung 7' kann die Vertiefung 7', wie in Fig. 2 andeutet, am Niveau der Rillenflanke 5a, 5b bzw. Schulterflanke 6 eine zu ihrem radial inneren Ende abnehmende Breite aufweisen, wobei die Breite am radial inneren Ende am Niveau der Rillenflanke 5a, 5b vorzugsweise 30% bis 50% der Breite b'₁ beträgt.

Die Erfindung ist auf die beschriebenen Ausführungsvarianten nicht beschränkt und nur innerhalb des Schutzumfanges der Ansprüche begrenzt.

Bei den an den Schulterflanken ausgebildeten Vertiefungen kann die in radialer Richtung ermittelte Tiefe, in welcher die die Vertiefungen begrenzenden Fläche(n) an ihrem radial innen Ende in die Schulterflanke übergehen, 35% bis 150%, insbesondere bis zu 70% bis 120%, der Profiltiefe betragen. Ferner können die Umfangsrillen, deren Rillenflanken mit Vertiefungen versehen sind, in Draufsicht beliebig, insbesondere zick-zack-förmig, verlaufen. Der Laufstreifen des Nutzfahrzeugreifens ist vorzugsweise mit zwei bis sechs Umfangsrillen versehen. Die Vertiefungen an den Rillenflanken können in Draufsicht insbesondere auch derart U-förmig gestaltet sein, dass die Vertiefungen durch eine einzige, gebogene Fläche begrenzt sind. Außerdem können die Vertiefungen ausschließlich an den Schulterflanken oder ausschließlich an den Rillenflanken ausgebildet sein. Die an der Laufstreifenperipherie, am Niveau der Rillen- bzw. Schulterflanke ermittelte Breite der Vertiefungen beträgt 4,0 mm bis 15,0 mm.

### Bezugsziffernliste

- 1: Profilpositiv
- 2: Profilpositiv
- 3: Umfangsrille
- 4: Umfangsrille
- 5a, 5b: Rillenflanke
- 6: Schulterflanke
- 7, 7': Vertiefung
- 7a, 7'a: Kante
- 7b: Kante
- 7c: Boden
- 7'c: Kante
- 7d, 7'd: Seitenfläche
- a₁, a₂: Abstand
- b₁, b'₁: Breite
- t₁, t₁': Tiefe
- T: Profiltiefe
- α, β, β': Winkel

## Patentansprüche

1. Nutzfahrzeugreifen mit einem Laufstreifen mit zumindest zwei auf Profiltiefe (T) ausgeführten Umfangsrillen (3), welche mittlere Profilpositive (1) und schulterseitige Profilpositive (2) voneinander trennen, wobei die Umfangsrillen (3) zu den mittleren Profilpositiven (1) Rillenflanken (5a, 5b) und die schulterseitigen Profilpositive (2) zur Seitenwand verlaufende Schulterflanken (6) aufweisen, wobei zumindest eine Rillenflanke (5a, 5b) zumindest einer Umfangsrille (3) und/oder zumindest eine Schulterflanke (6) mit in axialer Richtung in das bzw. die Profilpositiv(e) (1, 2) hineinragenden, zur Laufstreifenoberfläche offenen Vertiefungen (7, 7') versehen ist, wobei jede Vertiefung (7, 7') durch zumindest eine Fläche (7c, 7d, 7'd) begrenzt ist,
**dadurch gekennzeichnet,**
**dass** die Vertiefungen (7, 7'), jeweils an der Laufstreifenperipherie ermittelt, gegenüber dem Niveau der Rillenflanke (5a, 5b) bzw. Schulterflanke (6) eine Tiefe (t₁, t₁') von 2,0 mm bis 5,0 mm und am Niveau der Rillenflanke (5a, 5b) bzw. Schulterflanke (6) eine Breite (b₁, b₁') von 4,0 mm bis 15,0 mm aufweisen, wobei die Fläche(n) (7c, 7d, 7'd), welche jeweils eine der Vertiefungen (7, 7') begrenzt bzw. begrenzen, derart gekrümmt ist bzw. sind, dass sie an ihrem bzw. ihren radial inneren Ende(n) in einer in radialer Richtung ermittelten Tiefe (T₁) von 35% bis 90% der Profiltiefe (T) knickfrei in die Rillenflanke (5a, 5b) bzw. in einer in radialer Richtung ermittelten Tiefe (T₁') von 35% bis 150% der Profiltiefe (T) knickfrei in die Schulterflanke (6) übergehen.

2. Nutzfahrzeugreifen nach Anspruch 1, **dadurch gekennzeichnet, dass** die Tiefe (t₁, t₁') der Vertiefungen (7, 7') an der Laufstreifenperipherie gegenüber dem Niveau der Rillenflanke (5a, 5b) bzw. Schulterflanke (6) höchstens 3,0 mm beträgt.

3. Nutzfahrzeugreifen nach Anspruch 1 oder 2, **dadurch gekennzeichnet, dass** die in radialer Richtung ermittelte Tiefe (T₁), in welcher die Fläche(n) (7c, 7d, 7'd) knickfrei in die Rillenflanke (5a, 5b) übergeht bzw. übergehen, höchstens 75% der Profiltiefe (T) beträgt.

4. Nutzfahrzeugreifen nach Anspruch 1 oder 2, **dadurch gekennzeichnet, dass** die in radialer Richtung ermittelte Tiefe (T₁'), in welcher die Fläche(n) (7c, 7d, 7'd) knickfrei in die Schulterflanke (6) übergeht bzw. übergehen, 70% bis 120% der Profiltiefe (T) beträgt.

5. Nutzfahrzeugreifen nach einem der Ansprüche 1 bis 4, **dadurch gekennzeichnet, dass** die Vertiefungen (7, 7') am radial inneren Ende, am Niveau der Rillenflanke (5a , 5b) bzw. Schulterflanke (6) eine Breite von 30% bis 50% ihrer an der Laufstreifenperipherie, am Niveau der Rillenflanke (5a, 5b) bzw. Schulterflanke (6) ermittelten Breite (b₁, b₁') aufweisen.

6. Nutzfahrzeugreifen nach einem der Ansprüche 1 bis 5, **dadurch gekennzeichnet, dass** die Vertiefungen (7) in Draufsicht insgesamt U-förmig sind.

7. Nutzfahrzeugreifen nach Anspruch 6, **dadurch gekennzeichnet, dass** die in Draufsicht insgesamt U-förmigen Vertiefungen (7) durch eine einzige in Draufsicht bogen- oder U-förmige Fläche begrenzt sind.

8. Nutzfahrzeugreifen nach Anspruch 6, **dadurch gekennzeichnet, dass** die in Draufsicht insgesamt U-förmig Vertiefungen (7) an der Laufstreifenperipherie in Draufsicht trapezförmig und an dieser durch Trapezschenkel bildende Kanten (7a) und eine weitere Kante (7b) begrenzt sind.

9. Nutzfahrzeugreifen nach Anspruch 8, **dadurch gekennzeichnet, dass** die Trapezschenkel bildenden Kanten (7a), welche die Vertiefungen (7) an der Laufstreifenperipherie begrenzen, zur Umfangsrichtung unter einem Winkel (β) von 30° bis 80°, insbesondere von 55° bis 75°, verlaufen.

10. Nutzfahrzeugreifen nach einem der Ansprüche 1 bis 5, **dadurch gekennzeichnet, dass** die Vertiefungen (7') an der Laufstreifenperipherie durch zwei, in Draufsicht V-förmig zueinander verlaufende Kanten (7'a) begrenzt sind.

11. Nutzfahrzeugreifen nach Anspruch 10, **dadurch gekennzeichnet, dass** die in Draufsicht V-förmig zueinander verlaufenden Kanten (7'a) zur Umfangsrichtung unter einem Winkel (β') von 40° bis 70°, insbesondere von 55° bis 65°, verlaufen.

12. Nutzfahrzeugreifen nach einem der Ansprüche 1 bis 11, **dadurch gekennzeichnet, dass** beide Rillenflanken (5a, 5b) zumindest einer Umfangsrille (3) mit Vertiefungen (7, 7') versehen sind, wobei die Vertiefungen (7, 7') alternierend an den unterschiedlichen Rillenflanken (5a, 5b) ausgebildet sind.

13. Nutzfahrzeugreifen nach einem der Ansprüche 1 bis 12, **dadurch gekennzeichnet, dass** Vertiefungen (7, 7'), welche an derselben Rillenflanke (5a, 5b) bzw. Schulterflanke (6) ausgebildet sind, an der Laufstreifenperipherie in Umfangsrichtung einen Abstand (a₁, a₂) von 20,0 mm bis 80,0 mm voneinander aufweisen.

14. Nutzfahrzeugreifen nach Anspruch 13, **dadurch gekennzeichnet, dass** der Abstand (a₁, a₂) der Vertiefungen (7, 7'), welche an derselben Schulterflanke (6) ausgebildet sind, derart gewählt ist, dass in jedem Pitch des Laufstreifens zumindest eine, vorzugsweise genau eine, Vertiefung (7, 7') ausgebildet ist.

## Claims

1. Utility vehicle tyre having a tread with at least two circumferential channels (3), which are formed to a profile depth (T) and which separate central profile positives (1) and shoulder-side profile positives (2) from one another, wherein the circumferential channels (3) have channel flanks (5a, 5b) towards the central profile positives (1) and the shoulder-side profile positives (2) have shoulder flanks (6) running towards the side wall, wherein at least one channel flank (5a, 5b) of at least one circumferential channel (3) and/or at least one shoulder flank (6) is provided with depressions (7, 7') which extend into the profile positive (s) (1, 2) in the axial direction and are open towards the surface of the tread, wherein each depression (7, 7') is delimited by at least one surface (7c, 7d, 7'd),
**characterized**
**in that** the depressions (7, 7'), determined in each case at the periphery of the tread, have with respect to the level of the channel flank (5a, 5b) or shoulder flank (6) a depth (t₁, t₁') of 2.0 mm to 5.0 mm and at the level of the channel flank (5a, 5b) or shoulder flank (6) a width (b₁, b₁') of 4.0 mm to 15.0 mm, wherein the surface(s) (7c, 7d, 7'd) which in each case delimits or delimit one of the depressions (7, 7') is or are curved in such a way that, at its or their radially inner end(s), it or they go(es) over without a kink into the channel flank (5a, 5b) at a depth (T₁), determined in the radial direction, of 35% to 90% of the profile depth (T) or go(es) over without a kink into the shoulder flank (6) at a depth (T₁'), determined in the radial direction, of 35% to 150% of the profile depth (T).

2. Utility vehicle tyre according to Claim 1, **characterized in that** the depth (t₁, t₁') of the depressions (7, 7') at the periphery of the tread with respect to the level of the channel flank (5a, 5b) or shoulder flank (6) is at most 3.0 mm.

3. Utility vehicle tyre according to Claim 1 or 2, **characterized in that** the depth (T₁), determined in the radial direction, at which the surface(s) (7c, 7d, 7'd) goes or go over without a kink into the channel flank (5a, 5b) is at most 75% of the profile depth (T).

4. Utility vehicle tyre according to Claim 1 or 2, **characterized in that** the depth (T₁'), determined in the radial direction, at which the surface(s) (7c, 7d, 7'd) goes or go over without a kink into the shoulder flank (6) is 70% to 120% of the profile depth (T).

5. Utility vehicle tyre according to one of Claims 1 to 4, **characterized in that** the depressions (7, 7') have at the radially inner end, at the level of the channel flank (5a, 5b) or shoulder flank (6), a width of 30% to 50% of their width (b₁, b₁') at the periphery of the tread, determined at the level of the channel flank (5a, 5b) or shoulder flank (6).

6. Utility vehicle tyre according to one of Claims 1 to 5, **characterized in that** the depressions (7) are overall U-shaped in plan view.

7. Utility vehicle tyre according to Claim 6, **characterized in that** the depressions (7) that are overall U-shaped in plan view are delimited by a single arcuate or U-shaped surface in plan view.

8. Utility vehicle tyre according to Claim 6, **characterized in that** the depressions (7) that are overall U-shaped in plan view are trapezoidal in plan view at the periphery of the tread and are delimited at the periphery by edges (7a) forming the sides of a trapezoid and by a further edge (7b).

9. Utility vehicle tyre according to Claim 8, **characterized in that** the edges (7a) forming the sides of the trapezoid that delimit the depressions (7) at the periphery of the tread run in relation to the circumferential direction at an angle (β) of 30° to 80°, in particular of 55° to 75°.

10. Utility vehicle tyre according to one of Claims 1 to 5, **characterized in that** the depressions (7') are delimited at the periphery of the tread by two edges (7'a) that run in a V-shaped manner in relation to one another in plan view.

11. Utility vehicle tyre according to Claim 10, **characterized in that** the edges (7'a) that run in a V-shaped manner in relation to one another in plan view run in relation to the circumferential direction at an angle (β') of 40° to 70°, in particular of 55° to 65°.

12. Utility vehicle tyre according to one of Claims 1 to 11, **characterized in that** both channel flanks (5a, 5b) of at least one circumferential channel (3) are provided with depressions (7, 7'), wherein the depressions (7, 7') are formed alternately at the different channel flanks (5a, 5b).

13. Utility vehicle tyre according to one of Claims 1 to 12, **characterized in that** depressions (7, 7') that are formed at the same channel flank (5a, 5b) or shoulder flank (6) are at a spacing (a₁, a₂) of 20.0 mm to 80.0 mm from one another in the circumferential direction at the periphery of the tread.

14. Utility vehicle tyre according to Claim 13, **characterized in that** the spacing (a₁, a₂) of the depressions (7, 7') that are formed at the same shoulder flank (6) is chosen such that at least one, preferably precisely one, depression (7, 7') is formed in each pitch of the tread.

## Revendications

1. Pneumatique pour véhicules utilitaires muni d'une bande de roulement qui est munie d'au moins deux rainures circonférentielles (3) réalisées à la profondeur du profil (T), lesquelles séparent les uns des autres des éléments positifs de profil centraux (1) et des éléments positifs de profil côté épaulement (2), les rainures circonférentielles (3) présentant des flancs de rainure (5a, 5b) s'étendant vers les éléments positifs de profil centraux (1) et des flancs d'épaulement (6) s'étendant depuis les éléments positifs de profil côté épaulement (2) vers la paroi latérale, au moins un flanc de rainure (5a, 5b) d'au moins une rainure circonférentielle (3) et/ou au moins un flanc d'épaulement (6) étant doté de creux (7, 7') ouverts vers la surface de bande de roulement, s'enfonçant dans le ou les éléments positifs de profil (1, 2) dans la direction axiale, chaque creux (7, 7') étant limité par au moins une surface (7c, 7d, 7'd),
**caractérisé en ce que**
les creux (7, 7') présentent une profondeur (t₁, t₁') de 2,0 mm à 5,0 mm par rapport au niveau du flanc de rainure (5a, 5b) ou du flanc d'épaulement (6), et une largeur (b₁, b₁') de 4,0 mm à 15,0 mm au niveau du flanc de rainure (5a, 5b) ou du flanc d'épaulement (6), déterminées respectivement sur la périphérie de la bande de roulement, la ou les surfaces (7c, 7d, 7'd), qui limitent chacune un des creux (7, 7'), étant incurvées de telle sorte qu'elles passent à leurs extrémités radialement intérieures à une profondeur (T₁) de 35 % à 90 % de la profondeur de profil (T), déterminée dans la direction radiale, sans coude dans le flanc de rainure (5a, 5b) ou à une profondeur (T₁') de 35 % à 150 % de la profondeur de profil (T), déterminée dans la direction radiale, sans coude dans le flanc d'épaulement (6).

2. Pneu pour véhicules utilitaires selon la revendication 1, **caractérisé en ce que** la profondeur (t₁, t₁') des creux (7, 7') est d'au plus 3,0 mm sur la périphérie de bande de roulement par rapport au niveau du flanc de rainure (5a, 5b) ou du flanc d'épaulement (6) .

3. Pneu pour véhicules utilitaires selon la revendication 1 ou 2, **caractérisé en ce que** la profondeur (T₁), déterminée dans la direction radiale, à laquelle la ou les surfaces (7c, 7d, 7'd) passent sans coude dans le flanc de rainure (5a, 5b), est d'au plus 75 % de la profondeur de profil (T).

4. Pneu pour véhicules utilitaires selon la revendication 1 ou 2, **caractérisé en ce que** la profondeur (T₁'), déterminée dans la direction radiale, à laquelle la ou les surfaces (7c, 7d, 7'd) passent sans coude dans le flanc d'épaulement (6), est de 70 % à 120 % de la profondeur de profil (T).

5. Pneu pour véhicules utilitaires selon l'une quelconque des revendications 1 à 4, **caractérisé en ce que** les creux (7, 7') présentent, à l'extrémité radialement intérieure, au niveau du flanc de rainure (5a, 5b) ou du flanc d'épaulement (6), une largeur de 30 % à 50 % de leur largeur (b₁, b₁') déterminée sur la périphérie de bande de roulement, au niveau du flanc de rainure (5a, 5b) ou du flanc d'épaulement (6).

6. Pneu pour véhicules utilitaires selon l'une quelconque des revendications 1 à 5, **caractérisé en ce que** les creux (7) sont dans l'ensemble en forme de U en vue de dessus.

7. Pneu pour véhicules utilitaires selon la revendication 6, **caractérisé en ce que** les creux (7) dans l'ensemble en forme de U en vue de dessus sont limités par une surface individuelle en forme d'arc ou de U en vue de dessus.

8. Pneu pour véhicules utilitaires selon la revendication 6, **caractérisé en ce que** les creux (7) dans l'ensemble en forme de U en vue de dessus sont en forme de trapèze sur la périphérie de bande de roulement en vue de dessus et sont limités sur celle-ci par des bords (7a) formant des branches de trapèze et un bord supplémentaire (7b).

9. Pneu pour véhicules utilitaires selon la revendication 8, **caractérisé en ce que** les bords (7a) formant des branches de trapèze, qui limitent les creux (7) sur la périphérie de bande de roulement, s'étendent à un angle (β) de 30° à 80°, notamment de 55° à 75°, par rapport à la direction circonférentielle.

10. Pneu pour véhicules utilitaires selon l'une quelconque des revendications 1 à 5, **caractérisé en ce que** les creux (7') sont limités sur la périphérie de bande de roulement par deux bords (7'a) s'étendant en forme de V l'un par rapport à l'autre en vue de dessus.

11. Pneu pour véhicules utilitaires selon la revendication 10, **caractérisé en ce que** les bords (7'a) s'étendant en forme de V l'un par rapport à l'autre en vue de dessus s'étendent à un angle (β') de 40° à 70°, notamment de 55° à 65°, par rapport à la direction circonférentielle.

12. Pneu pour véhicules utilitaires selon l'une quelconque des revendications 1 à 11, **caractérisé en ce que** les deux flancs de rainure (5a, 5b) sont dotés d'au moins une rainure circonférentielle (3) munie de creux (7, 7'), les creux (7, 7') étant formés en alternance sur les différents flancs de rainure (5a, 5b).

13. Pneu pour véhicules utilitaires selon l'une quelconque des revendications 1 à 12, **caractérisé en ce que** des creux (7, 7'), qui sont formés sur le même flanc de rainure (5a, 5b) ou flanc d'épaulement (6), présentent, sur la périphérie de bande de roulement dans la direction circonférentielle, un espacement (a₁, a₂) de 20,0 mm à 80,0 mm les uns des autres.

14. Pneu pour véhicules utilitaires selon la revendication 13, **caractérisé en ce que** l'espacement (a₁, a₂) des creux (7, 7'), qui sont formés sur le même flanc d'épaulement (6), est choisi de telle sorte qu'au moins un, de préférence exactement un, creux (7, 7') soit formé dans chaque pas de la bande de roulement.
